Europäisches Patentamt

European Patent Office

Office européen des brevets

(11) Publication number: **0 390 504**
**A1**

(12) **EUROPEAN PATENT APPLICATION**

(21) Application number: **90303262.1**

(22) Date of filing: **27.03.90**

(51) Int. Cl.5: **F16L 33/26, F16L 9/06, F16L 11/15**

(30) Priority: **29.03.89 GB 8907113**

(43) Date of publication of application:
**03.10.90 Bulletin 90/40**

(84) Designated Contracting States:
**BE CH DE FR GB IT LI NL**

(71) Applicant: **SENIOR TIFT LIMITED**
**South Street**
**Enfield, Middlesex EN3 4LR(GB)**

(72) Inventor: **Proctor, John Stephen**
**Middle Barn, Netherleigh Court**
**Little Witley, Worcestershire WR6 6LL(GB)**

(74) Representative: **Lawrence, Brian Richard**
**59 Shenfield Place**
**Shenfield Brentwood Essex CM15 9AH(GB)**

(54) **Coupling arrangements.**

(57) A method of making a fluid tight coupling to a length of corrugated tubing (1) is described comprising the steps of providing a tubular coupling member (2) which fits over the corrugated tubing (1), and causing at least two rolling action circumferential grooves (10,11) to be provided in the coupling member (2) to cause it to be radially compressed into contact with the corrugated tubing (1). A hand tool is also described for forming the circumferential grooves (10,11) in the coupling member (2).

FIG 2

## Coupling Arrangements

This invention relates to coupling arrangements and more specifically to a method of making a fluid tight coupling to corrugated tubing, a hand operated tool for use in such method and to a corrugated tube coupling formed by said method.

It is known to provide corrugated tubing with a fluid tight (e.g. to gas or liquid) end coupling for attachment purposes. Existing coupling arrangements are either relatively expensive to implement or require the use of a power tool which is not easily portable and cannot be used "on site".

It is an object of the present invention to provide an improved method of making a fluid tight coupling to corrugated tubing and to provide a hand operated tool for use in such method, which is easily portable and can be used "on site".

According to one aspect of the present invention there is provided a method of making a fluid tight coupling to corrugated tubing comprising the steps of providing a tubular coupling member which fits over the end of said tubing, said coupling member overlapping a plurality of the corrugations of said tubing, causing a first rolling action circumferential groove to be formed in said coupling member in a position where it overlaps said tubing to cause it to be radially compressed into contact with said tubing, and causing a second rolling action circumferential groove to be formed in said coupling member in a second position where it overlaps said tubing to cause it to be radially compressed into contact with said tubing.

In a preferred method according to the said one aspect of the invention, said first position will be adjacent the end of said coupling member in which said tubing is fitted.

In carrying out the said one aspect of the invention it may be arranged that said first and second rolling action circumferential grooves are formed sequentially, or are formed simultaneously.

It may be arranged that at least one of said circumferential grooves is formed in said coupling member at a position which corresponds with a corrugation in said tubing, or it may be arranged that both said first and second circumferential grooves are formed in said coupling member at positions which correspond to respective corrugations in said tubing.

It may also be arranged that said first and second circumferential grooves are of substantially the same depth or of different depths.

It may, advantageously, be arranged that the action of forming each of said grooves causes the adjacent areas of said coupling member to be radially compressed into contact with said tubing.

Preferably, each of said grooves is formed by compressing said coupling member between a pair of cylindrical rollers and a groove forming roller, said rollers being disposed circumferentially around said coupling member and being caused to be rotated relative to the coupling member with the distance between the groove forming roller and the pair of rollers being successively reduced.

Another preferred method according to the said one aspect of the invention may include the additional step of providing a fluid sealing ring in at least one of the corrugations of said tubing which is overlapped by said coupling member, or the step of providing a fluid sealing ring in each of at least two corrugations of said tubing which are overlapped by said coupling member.

Advantageously, said coupling member is provided with an internally stepped bore affording an internal circumferential end face against which the end of said tubing abuts, in which case the additional step of providing a fluid sealing ring between said end face and the end of said tubing may be provided.

Conveniently, the one or more of said fluid sealing rings are constituted of polymeric material.

The said tubing may be of covered form, the covering of said tubing preferably being removed where it overlaps said coupling member.

According to a second aspect of the present invention, there is provided a hand tool comprising a pair of spaced apart cylindrical rollers, the axes of which are disposed parallel to one another, and a groove forming roller disposed adjacent said cylindrical rollers and having an axis parallel to the axes thereof, said groove forming roller and said cylindrical rollers being relatively movable whereby said coupling member having said tubing therein may be clamped therebetween, the axis of said coupling member being substantially parallel to the axes of said cylindrical rollers and said groove forming roller, said hand tool being rotated around said coupling member with said cylindrical rollers and said groove forming roller being gradually moved towards each other to cause at least one said circumferential groove to be formed in said coupling member.

In one form of hand tool, the groove forming roller may include two spaced apart groove forming sections, in which case the said two groove forming sections may be of equal size to produce grooves of the same depth or of unequal size to produce grooves of different depths.

A hand tool as aforesaid may conveniently comprise one or more measuring gauges for measuring grooves formed in said coupling member.

According to a further aspect of the present invention, there is provided a fluid tight coupling when afforded by the method according to the aforesaid first aspect of the invention or when produced by the hand tool according to the aforesaid second aspect of the invention.

An exemplary embodiment of the invention will now be described reference being made to the accompanying drawings, in which:

Fig. 1, is a cross-sectional side view of a corrugated tube coupling before deformation in accordance with the present invention;

Fig. 2, is a cross-sectional side view of a corrugated tube coupling after processing by the method according to the present invention;

Figs. 3 and 4, are side and end views respectively of a hand tool for carrying out the method according to the present invention;

Fig. 5, is a side view of an alternative roller arrangement for use in the hand tool depicted in Figs. 3 and 4; and

Fig. 6, is a cross-sectional side view of a preferred form of the corrugated tube coupling of Fig. 1.

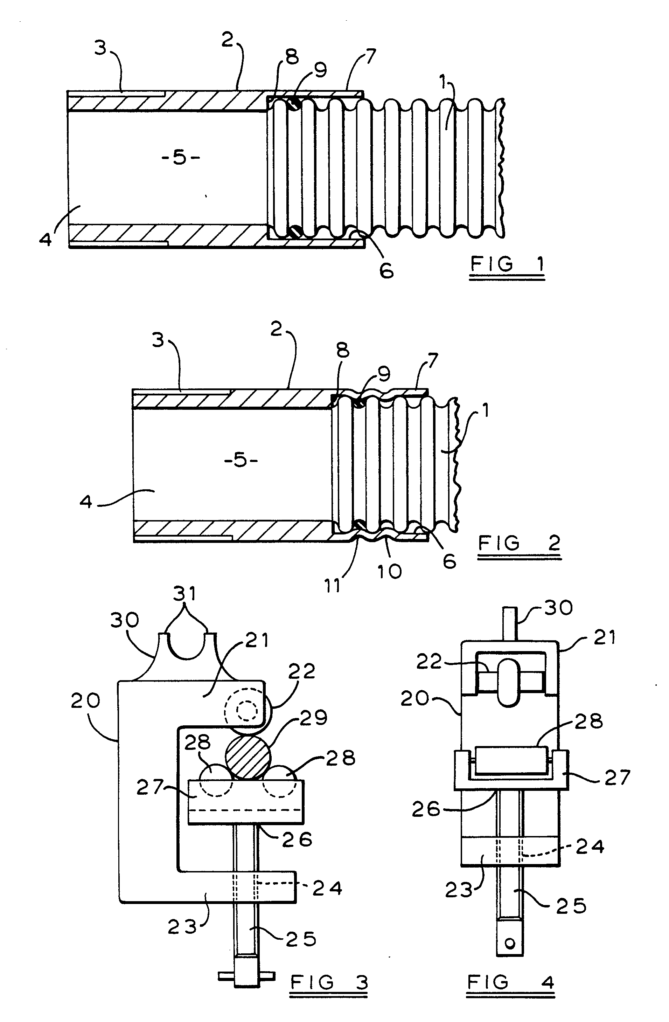

In Fig. 1 of the drawings there is shown in cross-section the left hand end of a length of corrugated tube 1, which may typically be of stainless steel, and to which it is required to make a fluid (e.g. gas or liquid) tight coupling. The coupling to the corrugated tube 1 is effected by a tubular end connector 2, which may be typically of stainless steel or brass or stainless steel welded to mild steel, having an externally threaded end part 3. The connector 2 is provided with a stepped through-bore 4, the smallest bore 5 being at the threaded end part 3 and the largest bore 6 being at the opposite end 7. Between the bores 5 and 6 is provided an internal circumferential end face 8.

The bore 6 of the connector 2 is adapted to receive the end of the corrugated tube 1 so that at least two, but possibly three as shown, or more of the corrugations of the tube 1 are overlapped by the connector 2. The corrugated tube 1 is inserted in the bore 6 of the connector 2 until it abuts the internal end face 8. Preferably, a fluid sealing ring 9, typically constituted of polymeric material, is provided in one of the corrugations that are overlapped by the connector 2, but it should be appreciated that similar sealing rings may also be provided in the remaining overlapped corrugations.

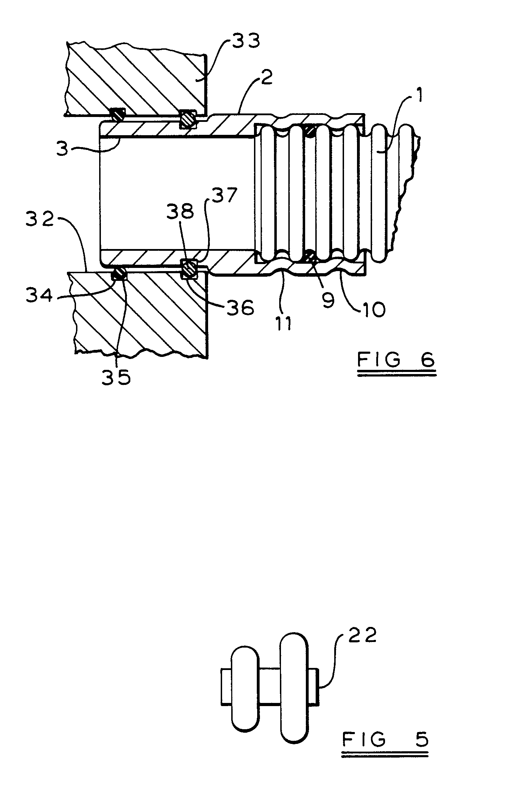

In order to seal the corrugated tube 1 within the connector 2, the end 7 of the connector 2 is provided with two circumferentially disposed grooves 10 and 11 which are formed in the connector 2 by means of a rolling technique as will be described with reference to Figs. 3 and 4. The grooves 10 and 11 cause the connector 2 to be radially compressed into contact with the corrugated tube 2 within the bore 6. Although it is envisaged that the grooves 10 and 11 may be formed simultaneously, it is felt that there is some advantage in forming the groove 10, which is adjacent the end of the connector 2, first and then forming groove 11 which would have the effect of forcing the end of the corrugated tube 1 longitudinally against the internal end face 8 of the connector 2 thereby increasing the fluid sealing effect. It is also envisaged that a further sealing ring (not shown), typically of polymeric material, may be provided between the internal end face 8 and the end of the corrugated tube 1.

In Figs. 3 and 4 of the drawings there is shown a hand tool which enables the circumferential grooves 10 and 11 in the coupling arrangement shown in Fig. 2 to be formed "on site".

The hand tool 10 shown in Figs. 3 and 4 has the general construction of a "G" clamp. It consists of a generally "C" shaped body 20 to the upper arm 21 of which is rotatively attached a groove forming roller 22 and the lower arm 23 of which is provided with a threaded bore 24 in which is received a threaded adjusting rod 25. To the top end 26 of the adjusting rod 25 is rotatively attached a roller carrier 27 of "U" shaped form, and in which is rotatively supported two cylindrical rollers 28. The axes of the groove forming roller 22 and the cylindrical rollers 28 are all parallel.

In order to form a circumferential groove in the corrugated tube coupling as described with reference to Fig. 1, the coupling is inserted as shown in cross-hatched lines at 29 in Fig. 3 and the adjusting rod 25 is tightened so that the coupling is compressed between the groove forming roller 22 and the cylindrical rollers 28. The hand tool is then rotated continuously around the coupling 29 and at the same time the adjusting rod 25 is continually tightened. This has the effect of causing a groove to be formed in the coupling using a rolling technique that can easily be achieved by hand. It also has the effect of causing the adjacent areas of the connector 2 to be radially compressed into contact with the corrugated tube 1.

On the top face of the upper arm 21 of the hand tool shown in Figs. 3 and 4 is formed a groove measuring probe 30 having upstanding fingers 31 the distance between which corresponds to the diameter of the groove 10 or 11 (in Fig. 2) when it is fully formed. Thus the coupling 29 can be periodically inserted between the fingers 31 until the required groove depth has been obtained. If necessary measuring probes 30 of different sizes may be provided.

In Fig. 5 of the drawings there is shown an alternative form of groove forming roller 22 which is adapted to form the two grooves 10 and 11 (Fig. 2) simultaneously. As shown in Fig. 5, the roller is adapted to form grooves of different depths, but it should be appreciated that the roller 22 may be adapted to give the same or different groove depths as required.

Whilst it is envisaged that the best fluid sealing effect will be achieved when the grooves 10 and 11 formed in the connector 2 are aligned with respective corrugations in the corrugated tube 1, it has been found that this is not necessarily the case and the positioning of the grooves 10 and 11 is apparently not critical. It should be appreciated that more than two grooves could be used if required.

In Fig. 6 of the drawings there is shown in cross-section a preferred form of the corrugated tube fluid coupling of Fig. 1 in which three complete corrugations of the corrugated tube 1 are received in the bore 6 of the tubular end connector 2, a fluid sealing ring 9 being provided in the second-from-end corrugation, the circumferential grooves 10 and 11 being provided at positions corresponding to the end corrugation of the tube 1 and the third-from-end corrugation of the tube 1, respectively, the groove 10 preferably being formed before the groove 11. In order to correctly position the grooves 10 and 11 on the connector 2, the connector may be provided with indications, e.g. scribed circumferential lines, where the grooves 10 and 11 are to be formed. It has been found that such a coupling provides a good gas and/or liquid seal and is particularly advantageous in that there is electrical continuity between the tube 1 and the connector 2 and also some limited rotation of the connector 2 relative to the tube 1 can be obtained. In the fluid coupling of Fig. 6 instead of a threaded end part 3 being provided, the end part 3 of the connector 2 is adapted to be received in a cylindrical recess 32 in, for example, a gas distribution manifold 33, the recess 32 being provided with a circumferential groove 34 in which is located a fluid sealing ring 35 for making sealing contact between the manifold 33 and the end part 3 of the connector 2, the recess 32 and the end part 3 of the connector 2 also being provided with co-operating circumferential grooves 36 and 37 respectively, for receiving a locking member 38, such as a drive wire or a circlip, which retains the connector 2 in the manifold 33.

## Claims

1. A method of making a fluid tight coupling to a length of corrugated tubing comprising the steps of providing a tubular coupling member which fits over the end of said tubing, said coupling member overlapping a plurality of the corrugations of said tubing, causing a first rolling action circumferential groove to be formed in said coupling member in a position where it overlaps said tubing to cause it to be radially compressed into contact with said tubing, and causing a second rolling action circumferential groove to be formed in said coupling member in a second position where it overlaps said tubing to cause it to be radially compressed into contact with said tubing.

2. A method as claimed in claim 1, in which said first position is adjacent the end of said coupling member in which said tubing is fitted.

3. A method as claimed in claim 1 or claim 2, in which said first and second rolling action circumferential grooves are formed sequentially.

4. A method as claimed in claim 1 or claim 2, in which said first and second rolling action circumferential grooves are formed simultaneously.

5. A method as claimed in any preceding claim, in which at least one of said circumferential grooves is formed in said coupling member at a position which corresponds with a corrugation in said tubing.

6. A method as claimed in any preceding claim, in which both said first and second circumferential grooves are formed in said coupling member at positions which correspond to respective corrugations in said tubing.

7. A method as claimed in any preceding claim, in which said first and second circumferential grooves are of substantially the same depth.

8. A method as claimed in any of claims 1 to 6, in which said first and second circumferential grooves are of different depths.

9. A method as claimed in any preceding claim, in which the action of forming each of said grooves causes the adjacent areas of said coupling member to be radially compressed into contact with said tubing.

10. A method as claimed in any preceding claim, in which each of said grooves is formed by compressing said coupling member between a pair of cylindrical rollers and a groove forming roller, said rollers being disposed circumferentially around said coupling member and being caused to be rotated relative to the coupling member with the distance between the groove forming roller and the pair of rollers being successively reduced.

11. A method as claimed in any preceding claim, comprising the step of providing a fluid sealing ring in at least one of the corrugations of said tubing which is overlapped by said coupling member.

12. A method as claimed in claim 11, comprising the step of providing a fluid sealing ring in each of at least two corrugations of said tubing which are overlapped by said coupling member.

13. A method as claimed in any preceding claim, in which said coupling member is provided with an internally stepped bore affording an internal circumferential end face against which the end of said tubing abuts.

14. A method as claimed in claim 13, comprising the step of providing a fluid sealing ring between said end face and the end of said tubing.

15. A method as claimed in any of claims 11 to 14, in which one or more of said fluid sealing rings are constituted of polymeric material.

16. A method as claimed in any preceding claim, in which said tubing is of covered form, the covering of said tubing being removed where it overlaps said coupling member.

17. A hand tool for use in the method of any of claims 1 to 16, comprising a pair of spaced apart cylindrical rollers the axes of which are disposed parallel to one another, and a groove forming roller disposed adjacent said cylindrical rollers and having an axis parallel to the axes thereof, said groove forming roller and said cylindrical rollers being relatively movable whereby said coupling member having said tubing therein may be clamped therebetween, the axis of said coupling member being substantially parallel to the axes of said cylindrical rollers and said groove forming roller, said hand tool being rotated around said coupling member with said cylindrical rollers and said groove forming roller being gradually moved towards each other to cause at least one said circumferential groove to be formed in said coupling member.

18. A hand tool as claimed in claim 17, in which the groove forming roller includes two spaced apart groove forming sections.

19. A hand tool as claimed in claim 18, in which the said two groove forming sections are of equal size to produce grooves of the same depth.

20. A hand tool as claimed in claim 18, in which said two groove forming sections are of unequal size to produce grooves of different depths.

21. A hand tool as claimed in any of claims 17 to 20, comprising one or more measuring gauges for measuring grooves formed in said coupling member.

22. A coupling produced by the method of any one of claims 1 to 16.

23. A coupling produced by use of the hand tool claimed in any of claims 17 to 21.

FIG 1

FIG 2

FIG 3

FIG 4

FIG 6

FIG 5

| Category | Citation of document with indication, where appropriate, of relevant passages | Relevant to claim | CLASSIFICATION OF THE APPLICATION (Int Cl⁵) |
|---|---|---|---|

## DOCUMENTS CONSIDERED TO BE RELEVANT — EP 90303262.1

| Category | Citation of document with indication, where appropriate, of relevant passages | Relevant to claim | CLASSIFICATION OF THE APPLICATION (Int Cl⁵) |
|---|---|---|---|
| X | DE - A1 - 3 445 662 (ALBERT SPECK KG) * Totality * | 1,2,5, 11 | F 16 L 33/26 F 16 L 9/06 F 16 L 11/15 |
| A | DE - A1 - 3 720 620 (RHYDCON GROTEN GMBH CO KG) | | |

TECHNICAL FIELDS SEARCHED (Int Cl⁵)

F 16 L 9/00
F 16 L 11/00
F 16 L 13/00
F 16 L 33/00
F 16 L 51/00

The present search report has been drawn up for all claims

| Place of search | Date of completion of the search | Examiner |
|---|---|---|
| VIENNA | 30-05-1990 | SCHUGANICH |